# EUROPÄISCHE PATENTANMELDUNG

(11) **EP 1 055 913 A2**
(43) Veröffentlichungstag der Anmeldung: **29.11.2000**
(21) Anmeldenummer: 00110481.9
(22) Anmeldetag: 17.05.2000
(51) Int. Cl.: G01D 5/165

(54) **Fahrpedalgeber**

(30) Priorität: 27.05.1999 DE 19924410
(71) Anmelder: Hella KG Hueck & Co., 59552 Lippstadt (DE)
(72) Erfinder: Berglar, Heinrich, 59510 Lippetal (DE)

(57) **Zusammenfassung**

Beschrieben wird ein Fahrpedalgeber mit einem Gehäuse, mit einem Pedalhebel, der an einem Endabschnitt mit einer Pedalplatte verbunden ist und am entgegengesetzten Endabschnitt im Gehäuse gelagert ist und mit einem elektrischen Drehsensor, bestehend aus einer Sensorplatine und einem Betätigungselement, welches durch den Pedalhebel angetrieben ist. Der erfindungsgemäße Fahrpedalgeber zeichnet sich gegenüber bekannten Ausführungen durch Einsparung der metallenen Welle aus, weiche den Pedalhebel mit dem Betätigungselement des Drehsensors verbindet. Dies wird dadurch erzielt, daß der Pedalhebel aus einem Kunststoff besteht und einstückig ein erstes Verbindungselement ausbildet, welches mit einem zweiten Verbindungselement des Betätigungselements direkt verbunden ist.

## Beschreibung

Die Erfindung betrifft einen Fahrpedalgeber mit einem Gehäuse, mit einem Pedalhebel, der an einem Endabschnitt mit einer Pedalplatte verbunden ist und am entgegengesetzten Endabschnitt im Gehäuse gelagert ist und mit einem elektrischen Drehsensor, bestehend aus einer Sensorplatine und einem Betätigungselement, welches durch den Pedalhebel angetrieben ist.

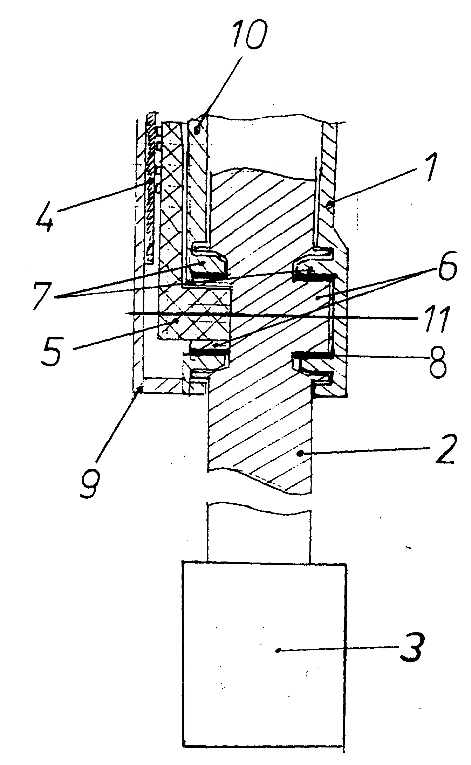

Eine solcher Fahrpedalgeber ist aus der Zusammenschau der Figur 2 oder 3 der DE 44 07 05 C1 (Hauptpatent) mit der Figur 1 der DE 195 21 821 C1 (zugehöriges Zusatzpatent) bekannt. Bei dem bekannten Fahrpedalgeber ist der Pedalhebel und das Betätigungselement mit einer metallenen Betätigungswelle verbunden.

Der Erfindung liegt die Aufgabe zugrunde, einen Fahrpedalgeber zu schaffen, welcher gegenüber vorbekannten Fahrpedalgebern einen einfacheren und kostengünstigeren Aufbau aufweist.

Diese Aufgabe wird erfindungsgemäß dadurch gelöst, daß der Pedalhebel aus einem Kunststoff besteht und einstückig ein erstes Verbindungselement ausbildet, welches mit einem zweiten Verbindungselement des Betätigungselements direkt verbunden ist.

Durch den erfindungsgemäßen Aufbau des Fahrpedalgebers kann die metallene Betätigungswelle zwischen dem Pedalhebel und dem Betätigungselement eingespart werden.

Besonders vorteilhaft ist es, den Fahrpedalgeber gemäß der Merkmale der Unteransprüche auszugestalten. Hierdurch kann auf eine Welle für den Pedalhebel gänzlich verzichtet werden, da der Pedalhebel selbst innerhalb des Gehäuses gelagert wird.

Ein Ausführungsbeispiel eines erfindungsgemäßen Fahrpedalgebers soll im folgenden anhand der Zeichnung dargestellt und näher erläutert werden. Die einzige Figur zeigt eine Schnittdarstellung eines Fahrpedalgebers.

Ein Pedalhebel (2), welcher an einem Endabschnitt eine Pedalplatte (3) aufweist, ist innerhalb des Gehäuses (1, 10) des Fahrpedalgebers gelagert. Das Gehäuse (1) besteht aus einem Gehäuseteil (1) und einer Gehäuseabdeckung (10). Der Pedalhebel (2) weist zwei senkrecht zu seiner Längsachse angeformte Zapfen (6) auf, welche in Buchsen (7) im Gehäuseteil (1) und in der Gehäuseabdeckung drehbeweglich gelagert sind. Hierzu sind an die Zapfen (6) Lagerschalen (8) aus einem lagerfähigen Material, z.B. PP oder POM, im Zweikomponentenverfahren angeformt.

Alternativ kann auch der gesamte Pedalhebel (2), einschließlich der angeformten Zapfen (6) aus einem lagerfähigen Material gefertigt sein, so daß auf die Anformung von Lagerschalen an die Zapfen verzichtet werden kann. Die Zapfen (6) am Pedalhebel bilden somit die Welle des Pedalhebels (2) aus.

Durch die beidseitig offene Buchse in der Gehäuseabdeckung (10) ist ein Zapfen (6) des Fahrpedalgebers mit dem Betätigungselement (5) des Drehsensors, welcher in der Figur als Potentiometer ausgebildet ist, aber auch als kontaktloser Sensor ausführbar ist, verbunden, so daß das Betätigungselement (5) (hier der Schleiferträger des Potentiometers) und der Pedalhebel sich um die gleiche Drehachse (11) drehen.

Die Verbindung zwischen dem Zapfen des Pedalhebels (2) und dem Betätigungselement (5) kann vorteilhaft mittels des aus der DE 195 44 997 C1 bekannten (in der Figur allerdings nicht ersichtlichen) Verbindungselements hergestellt werden.

Der mit dem Gehäuse (1,10) verbundene Drehsensor wird durch einen Sensordeckel (9), welcher die zum Potentiometer gehörende Sensorplatine trägt, abgeschlossen.

### Bezugszeichen

- 1: Gehäuseteil
- 2: Pedalhebel
- 3: Pedalplatte
- 4: Sensorplatine
- 5: Betätigungselement
- 6: Zapfen
- 7: Buchsen
- 8: Lagerschalen
- 9: Sensordeckel
- 10: Gehäuseabdeckung
- 11: Drehachse
- (1, 10): Gehäuse

## Patentansprüche

1. Fahrpedalgeber
- mit einem Gehäuse (1,10),
- mit einem Pedalhebel (2), der an einem Endabschnitt mit einer Pedalplatte (3) verbunden ist und am entgegengesetzten Endabschnitt im Gehäuse (1, 10) gelagert ist,
- mit einem elektrischen Drehsensor, bestehend aus einer Sensorplatine (4) und einem Betätigungselement (5), welches durch den Pedalhebel (2) angetrieben ist,
**dadurch gekennzeichnet,**
daß der Pedalhebel (2) aus einem Kunststoff besteht und einstückig ein erstes Verbindungselement ausbildet, welches mit einem zweiten Verbindungselement des Betätigungselements (5) direkt verbunden ist.

2. Fahrpedalgeber nach Anspruch 1, dadurch gekennzeichnet, daß senkrecht zur Längsachse des Pedalhebels (2) an diesen einstückig zwei Zapfen (6) angeformt sind, die in Buchsen (7) des Gehäuses (1,10) gelagert sind.

3. Fahrpedalgeber nach Anspruch 2, dadurch gekennzeichnet, daß an die Zapfen (6) Lagerschalen (8) angespritzt sind.

4. Fahrpedalgeber nach Anspruch 2, dadurch gekennzeichnet, daß die Zapfen (6) aus einem lagerfähigem Kunstoff bestehen.

5. Fahrpedalgeber nach Anspruch 2, dadurch gekennzeichnet, daß das Betätigungselement (5) des Drehsensors mit einem der Zapfen (6) verbunden ist und daß Betätitigungselement und Zapfen die gleiche Drehachse (11) aufweisen.

6. Fahrpedalgeber nach Anspruch 1, dadurch gekennzeichnet, daß der Drehsensor ein Potentiometer ist und das Betätigungselement (5) der Schleiferträger des Potentiometers ist.

7. Fahrpedalgeber nach Anspruch 1, dadurch gekennzeichnet, daß der Drehsensor als kontaktloser Sensor ausgeführt ist.

8. Fahrpedalgeber nach Anspruch 7, dadurch gekennzeichnet, daß das Betätigungselement des kontaktlosen Sensors direkt auf der Stirnfläche eines Zapfens angebracht oder aufgeprägt ist.
